# EUROPÄISCHE PATENTSCHRIFT

(11) **EP 3 184 869 B1**
(45) Veröffentlichungstag und Bekanntmachung des Hinweises auf die Patenterteilung: **11.09.2019**
(21) Anmeldenummer: 16195261.9
(22) Anmeldetag: 24.10.2016
(51) Int. Cl.: F16L 37/08, F16L 37/086, F16L 37/084

(54) **MONTAGEINDIKATOR**
MOUNTING INDICATOR
INDICATEUR DE MONTAGE

(30) Priorität: 23.12.2015 DE 102015016710
(43) Veröffentlichungstag der Anmeldung: 28.06.2017
(73) Patentinhaber: AUDI AG, 85045 Ingolstadt (DE)
(72) Erfinder: Arnold, Markus, 74722 Buchen (DE)

(56) Entgegenhaltungen:
- WO-A1-2011/139152
- DE-A1-102012 106 925
- DE-B3-102011 107 186

## Beschreibung

Die Erfindung betrifft einen Montageindikator für eine Steckverbindung und eine Rohranordnung, die zwei über eine Steckverbindung verbundene Rohre und einen Montageindikator umfasst.

Für eine Steckverbindung, die auch als Schnellkupplung, bspw. SAE-Schnellkupplung nach dem SAE-Standard ausgebildet sein und/oder bezeichnet werden kann, kann eine Montageindikator vorgesehen sein, mit dem anzuzeigen ist, dass die Steckverbindung, üblicherweise zwischen zwei Rohren oder Leitungen, festsitzt.

Diesbezüglich wird auf eine Schnellkupplung verwiesen, die aus der Druckschrift DE 39 29 723 C2 bekannt ist. Eine insbesondere als Schnellkupplung ausgebildete Kupplung für eine Fluidleitung mit einer Bajonette-Überwurfmutter ist aus der Druckschrift DE 102 17 615 A1 bekannt. Eine Schnellkupplung mit einem Kupplungsanzeiger ist in der Druckschrift DE 602 01 546 T2 beschrieben. Eine Schnellverbindungsanordnung zur lösbaren Verbindung einer Medienleitung mit einem SAE-Stutzen ist aus der Druckschrift DE 10 2012 106 925 A1 bekannt. Eine weitere Schnellkupplung ist in der Druckschrift EP 0 806 597 B1 beschrieben. Außerdem ist aus der Druckschrift EP 1 296 089 B1 eine Anschlussvorrichtung für eine Strömungsmittelleitung bekannt.

Die Druckschrift WO 2011/139152 A1 beschreibt eine Kopplungsvorrichtung zum Verbinden und/oder Absperren von Fluidleitungen, die ein männliches Kopplungselement, ein weibliches Kopplungselement und eine Bajonett-Befestigung umfasst. Ein Aufnahmeteil einer Kupplung für eine Fluidleitung und eine Kupplung für eine Fluidleitung sind aus der Druckschrift DE 10 2011 107 186 B3 bekannt.

Vor diesem Hintergrund werden ein Montageindikator und eine Rohranordnung mit den Merkmalen der unabhängigen Patentansprüche vorgestellt. Ausgestaltungen des Montageindikators und der Rohranordnung gehen aus den abhängigen Patentansprüchen und der Beschreibung hervor.

Der erfindungsgemäße Montageindikator ist für eine Steckverbindung vorgesehen, die zum Verbinden von zwei Rohren ausgebildet ist. Dabei umfasst die Steckverbindung ein an einer Außenwand eines ersten Rohrs angeordnetes Steckmodul und ein Aufnahmemodul, das ein Ende eines zweiten Rohrs umschließt, wobei ein Ende des ersten Rohrs und das Steckmodul in das Aufnahmemodul einzuführen sind. Der Montageindikator weist eine zylinderförmige Hülse auf, in der mindestens ein Bajonettverschluss-Kanal angeordnet ist, wobei der Bajonettverschluss-Kanal zu der Hülse angular orientiert ist und eine axial orientierte Öffnung aufweist, wobei in dem mindestens einen Bajonettverschluss-Kanal ein Prüfzapfen verschiebbar angeordnet ist. Der Montageindikator umfasst zudem mindestens ein Sicherungselement, das an der Außenwand des ersten Rohrs angeordnet werden kann. Zur Montage ist die Hülse, das zweite Rohr umschließend, in Richtung des Endes des zweiten Rohrs zu verschieben, wobei das mindestens eine Sicherungselement durch die axial orientierte Öffnung in den mindestens einen angular orientierten Bajonettverschluss-Kanal einzuführen ist, wobei das mindestens eine Sicherungselement mit einer Wandung des angular orientierten Bajonettverschluss-Kanals in Anlage gerät. Außerdem ist die Hülse um die Steckverbindung herum zu drehen, wobei das mindestens eine Sicherungselement mit dem Prüfzapfen in Anlage gerät, wobei der Prüfzapfen innerhalb des angular orientierten Bajonettverschluss-Kanals durch den Prüfzapfen aus einer ursprünglichen passiven Position in eine aktive Position zu verschieben ist.

Der Montageindikator umfasst einen ersten ringförmigen Anschlag, der an einer Innenwand der zylinderförmigen Hülse angeordnet ist, und einen zweiten Anschlag, der an einer Außenwand des Aufnahmemoduls angeordnet ist. Beim Verschieben der Hülse in Richtung des Endes des zweiten Rohrs gerät der erste Anschlag mit dem zweiten Anschlag in Anlage.

Das mindestens eine Sicherungselement ist dann in dem angular orientierten Bajonettverschluss-Kanal anzuordnen, wenn das Steckmodul und das Aufnahmemodul miteinander verbunden, bspw. verrastet sind. Falls das mindestens eine Sicherungselement in dem angular orientierten Bajonettverschluss-Kanal angeordnet ist, wird dies dadurch angezeigt, dass sich der Prüfzapfen in der aktiven Position befindet, was von außen erkennbar, bspw. sichtbar und/oder fühlbar bzw. ertastbar ist.

Weiterhin ist vorgesehen, dass das an der Außenwand des ersten Rohrs angeordnete Steckmodul zu dem Ende des ersten Rohrs einen Abstand aufweist. Die Wandung des mindestens einen angular orientierten Bajonettverschluss-Kanals bildet mindestens einen zweiten Anschlag der Hülse, der zu dem Ende der Innenwand der Hülse einen Abstand aufweist, der geringer als ein Abstand des ersten Anschlags der Hülse von dem Ende der Innenwand ist. Das mindestens eine Sicherungselement weist zu dem Ende des ersten Rohrs einen Abstand auf, der größer als ein Abstand des Steckmoduls zu dem Ende des ersten Rohrs ist.

Der Prüfzapfen in dem angular orientierten Bajonettverschluss-Kanal ist zumindest in der aktiven Position oder lediglich in der aktiven Position von außen erkennbar, bspw. sichtbar oder fühlbar.

Das mindestens eine Sicherungselement und der mindestens eine Bajonettverschluss-Kanal sind als zusammenwirkende Komponenten mindestens eines Bajonettverschlusses ausgebildet.

Die Hülse des Montageindikators besteht aus einem flammwidrigen, ggf. einem feuerfesten Material.

Die erfindungsgemäße Rohranordnung umfasst zwei über eine Steckverbindung verbundene Rohre und einen Montageindikator, wobei die Steckverbindung ein an einer Außenwand eines ersten Rohrs angeordnetes Steckmodul und ein Aufnahmemodul, das ein Ende eines zweiten Rohrs umschließt, aufweist, wobei ein Ende des ersten Rohrs und das Steckmodul in das Aufnahmemodul einzuführen sind. Der Montageindikator weist eine zylinderförmige Hülse auf, die mindestens einen angular orientierten Bajonettverschluss-Kanal mit einer axial orientierten Öffnung umfasst, wobei in dem mindestens einen Bajonettverschluss-Kanal ein Prüfzapfen verschiebbar angeordnet ist. Der Montageindikator umfasst zudem mindestens ein Sicherungselement, das an der Außenwand des ersten Rohrs angeordnet ist, und einen zweiten Anschlag, der an einer Außenwand des Aufnahmemoduls angeordnet ist. Zur Montage ist die Hülse, das zweite Rohr umschließend, in Richtung des Endes des zweiten Rohrs zu verschieben, wobei das mindestens eine Sicherungselement durch die axial orientierte Öffnung in den mindestens einen angular orientierten Bajonettverschluss-Kanal einzuführen ist. Dabei gerät der erste Anschlag mit dem zweiten Anschlag und das mindestens eine Sicherungselement mit einer Wandung des angular orientierten Bajonettverschluss-Kanals in Anlage. Außerdem ist die Hülse um die Steckverbindung herum zu drehen, wobei das mindestens eine Sicherungselement mit dem Prüfzapfen in Anlage gerät, wobei der Prüfzapfen innerhalb des angular orientierten Bajonettverschluss-Kanals aus einer ursprünglichen passiven Position in eine aktive Position zu verschieben ist.

Zum Bereitstellen der Steckverbindung als Teil der Rohranordnung sind das Aufnahmemodul und das Steckmodul der Steckverbindung miteinander zu verrasten. Danach ist die Hülse des Montageindikators mit der Steckverbindung zu verbinden, bspw. zu verrasten, was nur bei bereits zusammengefügter Steckverbindung möglich ist und durch die Position des Prüfzapfens innerhalb des angular orientierten Bajonettverschluss-Kanals optisch und/oder haptisch fühlbar anzuzeigen ist.

Durch die beiden Rohre der Rohranordnung ist ein Fluid zu transportieren. Hierbei ist das Fluid als bspw. brennbare Flüssigkeit ausgebildet. Die beiden Rohre sind in Ausgestaltung als Endabschnitte von Leitungen mit rohrförmigem Querschnitt ausgebildet und können starr oder elastisch verformbar sein.

Der vorgestellte Montageindikator mit dem mindestens einen Sicherungselement, das an dem ersten Rohr angeordnet ist, und dem mindestens einen Bajonettverschluss-Kanal als Komponente der Hülse ist auch als Bajonett-Montageindikator zu bezeichnen. Der Montageindikator ist für eine Steckverbindung aus zwei Rohren ausgebildet und stellt für die Steckverbindung eine Flammschutzfunktion bereit. Die Steckverbindung kann auch als Schnellkupplung, bspw. SAE-Schnellkupplung ausgebildet sein und/oder bezeichnet werden. Dabei ist eine derartige SAE-Schnellkupplung nach dem Standard der Society of Automotive Engineers (SAE) normiert. Es ist möglich, die Steckverbindung auch unabhängig von dem Montageindikator bereitzustellen. Durch nachträgliches Verbinden des Montageindikators mit der Steckverbindung ist für diese eine Flammschutzfunktion bereitzustellen. Dabei wirkt der Montageindikator mit dem Aufnahmemodul, das üblicherweise auch als Mutterstück der Steckverbindung bezeichnet werden kann, mechanisch zusammen. Dahingegen kann das Steckmodul als Vaterstück bezeichnet werden.

Sofern das Steckmodul und das Aufnahmemodul miteinander verbunden sind, ist der Montageindikator über eine Steckstelle bzw. Verbindungsstelle zwischen dem Aufnahmemodul und dem Steckmodul zu schieben. Sobald die Hülse des Montageindikators auch über das mindestens eine Sicherungselement an dem ersten Rohr geschoben ist, wobei das mindestens eine Sicherungselement als Komponente einer Sicherungsscheibe ausgebildet ist, ist die Hülse durch eine relative, koaxiale Drehung um die Steckverbindung zu schließen und zwischen der Hülse und dem mindestens einen Sicherungselement ein Bajonettverschluss bereitzustellen.

Bei einer Drehung der Hülse wird der mindestens eine Prüfzapfen innerhalb des Bajonettverschluss-Kanals durch das Sicherungselement betätigt und nach außen in die aktive Position gedrückt. Aufgrund einer Stellung des mindestens einen Prüfzapfens ist sofort zu erkennen, dass der Montageindikator an der Steckverbindung korrekt angeordnet ist. Somit ist durch Montage des Montageindikators festzustellen, ob die Steckverbindung richtig verrastet ist. Wäre dies nicht der Fall, wäre die Steckverbindung durch das Aufschieben der Hülse des Montageindikators automatisch zu verrasten.

Weiterhin ist vorgesehen, dass zwischen der Hülse und dem Aufnahmemodul eine Federkraft wirkt, aufgrund der unterbunden wird, dass sich der Montageindikator selbstständig öffnen kann.

Die Sicherungsscheibe mit dem mindestens einen Sicherungselement ist fest mit dem ersten Rohr und somit dem Vaterstück verbunden, wodurch sich ergibt, dass der Anwender den Montageindikator auch ohne Sichtkontakt mit einer Hand öffnen und schließen kann. Außerdem ist möglich, allein durch Ertasten der aktiven Position des mindestens einen Prüfzapfens die korrekte Montage des Montageindikators zu überprüfen. Hierbei ist vorgesehen, dass der mindestens eine Prüfzapfen bzw. der mindestens eine Prüfstift innerhalb des angular orientierten Bajonettverschluss-Kanals von der passiven Position in die aktive Position nach außen getreten ist.

Falls die Steckverbindung bspw. aufgrund eines beschädigten Aufnahmemoduls nicht mehr selbstständig verrastet werden kann, kann der Montageindikator auch als zusätzliche Sicherung dienen und somit ein Öffnen der Steckverbindung sowie ein Austreten des Fluids, bspw. von Kraftstoff, verhindern. Somit ist vorgesehen, dass der Montageindikator die Steckverbindung komplett verdeckt und somit auch als Flammschutz für die Steckverbindung dient, wodurch bspw. möglich ist, auf ein Flammschutzmodul aus Silikon zu verzichten. Alternativ oder ergänzend ist das Aufnahmemodul aus Edelstahl oder aus Kunststoff.

Üblicherweise ist eine Schnittstelle zwischen einem Motor und einer Karosserie eines Kraftfahrzeugs mit einer motorseitig angeordneten Steckverbindung bzw. Schnellkupplung für zwei zu verbindende Rohre bzw. Leitungen ausgestattet. Durch Vorsehen des vorgestellten Montageindikators ist eine Scheinsteckung der Steckverbindung auszuschließen. Der Montageindikator ist modular einsetzbar und bietet eine Alternative zu einer standardisierten SAE-Schnellkupplung, die einen integrierten Montageindikator umfasst.

Der vorgestellte Montageindikator ist bspw. auch für Steckverbindungen bzw. Schnellkupplungen geeignet, die lediglich in geringen Stückzahlen gefertigt werden. Durch den Montageindikator wird die Verbindung von zwei Rohren über die Steckverbindung gesichert und somit ein Abrutschen des Steckmoduls aus dem Aufnahmemodul verhindert. Somit ist ein Austreten von Kraftstoff aus den Rohren, die über die Steckverbindung miteinander verbunden sind, zu vermeiden. Ohne den Montageindikator wären ansonsten aufwendige Absicherungsmaßnahmen für die Steckverbindung, bspw. nach dem Vier-Augen-Prinzip oder durch eine Gegenzugprobe, umzusetzen. Außerdem kann somit auf eine Steckverbindung aus Edelstahl oder ein separates Silikonbauteil als Flammschutz verzichtet werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Schnittdarstellung eine Ausführungsform der erfindungsgemäßen Rohranordnung.
Figur 2 zeigt in schematischer Darstellung eine Montage der Rohranordnung aus Figur 1.

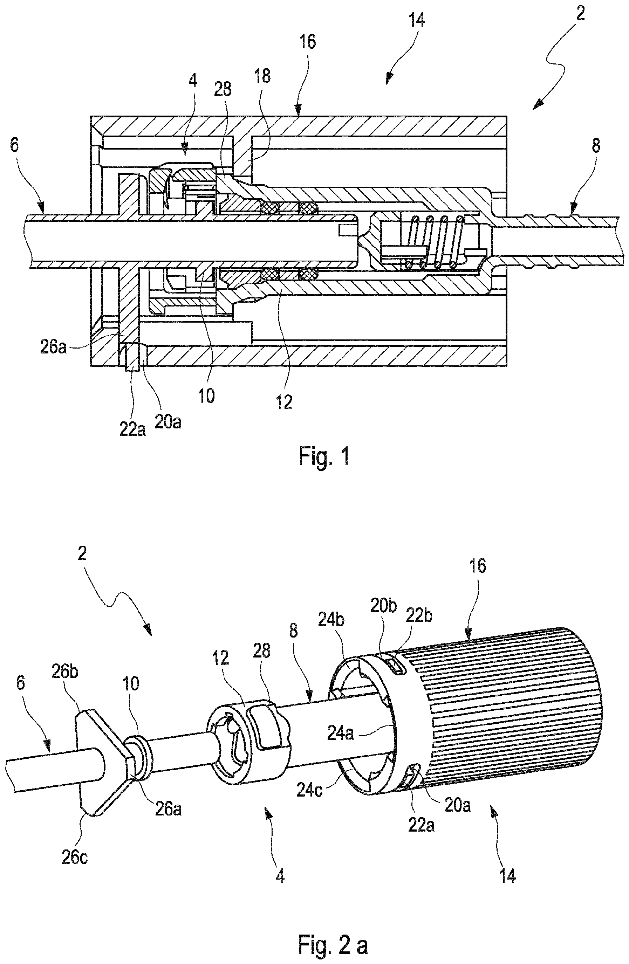

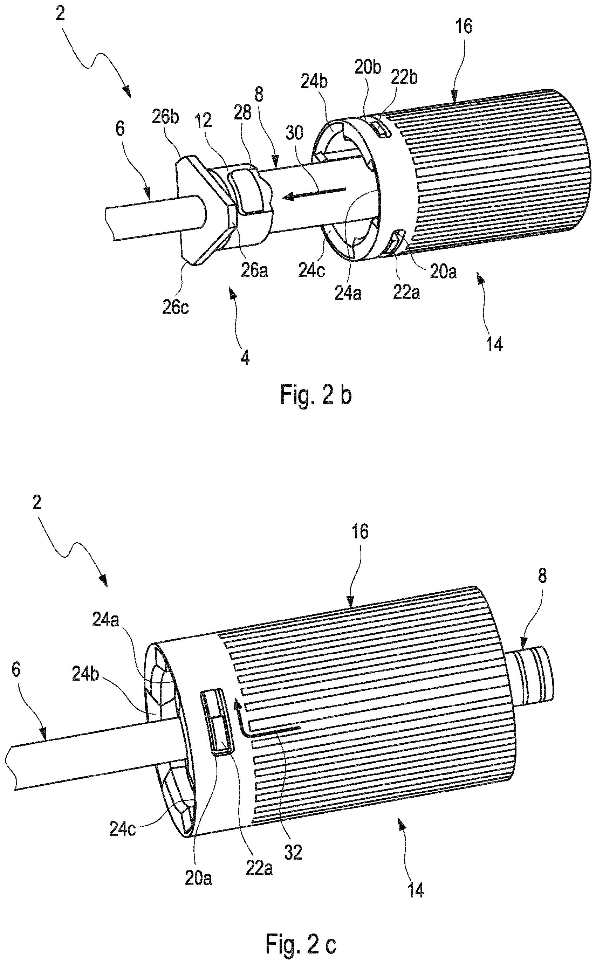

Die Ausführungsform der erfindungsgemäßen Rohranordnung 2 ist in Figur 1 in Schnittdarstellung und in den Figuren 2a, 2b, 2c bei einer Montage schematisch dargestellt. Dabei umfasst die Rohranordnung eine Steckverbindung 4 zum Verbinden eines ersten Rohrs 6 mit einem zweiten Rohr 8. Diese Steckverbindung 4 umfasst ein Steckelement 10, das hier an einer Außenwand des ersten Rohrs 6 angeordnet ist und dieses scheibenförmig koaxial umschließt. Außerdem umfasst die Steckverbindung 4 ein am Ende des zweiten Rohrs 8 angeordnetes Aufnahmemodul 12. Zum Verbinden der beiden Rohre 6, 8 ist ein Ende des ersten Rohrs sowie das Steckelement 10 in das Aufnahmemodul 12 des zweiten Rohrs 8 einzuführen, wobei das Steckelement 10 mit dem Aufnahmemodul 12 zu verrasten ist.

Die Figuren 1, 2a, 2b, 2c zeigen weiterhin Komponenten einer Ausführungsform des erfindungsgemäßen Montageindikators 14, wobei eine erste Komponente hier als Hülse 16 mit einer zylinderförmigen Innenwandung ausgebildet ist. Diese Hülse 16 umfasst an einer Innenwandung einen Anschlag 18 sowie drei Bajonettverschluss-Kanäle 20a, 20b, in denen jeweils ein Prüfzapfen 22a, 22b zwischen unterschiedlichen Positionen innerhalb des Bajonettverschluss-Kanals 20a, 20b verschiebbar angeordnet ist, wobei hier nur zwei Bajonettverschluss-Kanäle 20a, 20b erkennbar sind. Dabei weist ein jeweiliger Bajonettverschluss-Kanal 20a, 20b eine axial orientierte Öffnung 24a, 24b auf. Als weitere Komponenten des Montageindikators 14 sind hier drei Sicherungselemente 26a, 26b, 26c vorgesehen, die hier an einer Wandung des ersten Rohrs 6 angeordnet und als Komponenten einer hier weitgehend dreieckigen Sicherungsscheibe mit abgerundeten Ecken ausgebildet ist, wobei durch diese abgerundeten Ecken der Sicherungsscheibe die Sicherungselemente 26a, 26b, 26c bereitgestellt werden. Eine weitere Komponente des Montageindikators 14 ist hier als Anschlag 28 ausgebildet, der an einer Außenwand des Aufnahmemoduls 12 angeordnet ist.

Weiterhin ist vorgesehen, dass ein Abstand des Steckmoduls 10 zu einem Ende des Rohrs 6 geringer als ein jeweiliger Abstand eines Sicherungselements 26a, 26b, 26c zu dem Ende des ersten Rohrs 6 ist. Außerdem ist ein Abstand eines Bajonettverschluss-Kanals 20a, 20b zu einem Ende der Hülse 16, die dem ersten Rohr 6 zugewandt ist, geringer als der Abstand des Anschlags 18 zu demselben Ende.

Bei einer Montage der Rohranordnung 2 und somit bei einer Montage der Steckverbindung 4 mit Hilfe des Montageindikators 14 werden, wie die Figuren 2a und 2b zeigen, das Ende des ersten Rohrs 6 sowie das Steckmodul 10 in das Aufnahmemodul 12 des zweiten Rohrs 8 eingeführt, wobei das Steckmodul 10 innerhalb des Aufnahmemoduls 12 verrastet wird.

Weiterhin wird die Hülse 16, die das zweite Rohr koaxial umschließt, wie durch einen Pfeil 30 in Figur 2b angedeutet, in Richtung der Steckverbindung 4 sowie der Sicherungselemente 26a, 26b, 26c an der Außenwand des ersten Rohrs 6 geschoben. Dabei wird jeweils ein Sicherungselement 26a, 26b, 26c durch eine Ausnehmung 24a, 24b, 24c in einen angular orientierten Bajonettverschluss-Kanal 20a, 20b eingeführt. Dabei ist ein mit der Ausnehmung 24c verbundener Bajonettverschluss-Kanal in den Figuren nicht dargestellt. Danach wird die Hülse 16, wie in Figur 2c gezeigt, in Richtung eines Pfeils 32 hier entgegen dem Uhrzeigersinn relativ zu den Rohren 6, 8 gedreht. Hierbei werden die Prüfzapfen 22a, 22b innerhalb der Bajonettverschluss-Kanäle 20a, 20b durch die Sicherungselemente 26a, 26b, 26c beaufschlagt und von einer passiven Position in eine aktive Position gedrückt, hier nach außen geschoben. Außerdem ist vorgesehen, dass der Anschlag 18 der Hülse 16 mit dem Anschlag 28 des Aufnahmemoduls 12 in Anlage gerät, was aus Figur 1 hervorgeht.

## Patentansprüche

1. Montageindikator für eine Steckverbindung (4), die zum Verbinden von zwei Rohren (6,8) ausgebildet ist,
- wobei die Steckverbindung (4) ein an einer Außenwand eines ersten Rohrs (6) angeordnetes Steckmodul (10) und ein Aufnahmemodul (12), das ein Ende eines zweiten Rohrs (8) umschließt, aufweist, wobei ein Ende des ersten Rohrs (6) und das Steckmodul (10) in das Aufnahmemodul (12) einzuführen sind,
- wobei der Montageindikator (14) eine zylinderförmige Hülse (16) aufweist, die mindestens einen angular orientierten Bajonettverschluss-Kanal (20a, 20b) mit einer axial orientierten Öffnung (24a, 24b, 24c) aufweist, in dem ein Prüfzapfen (22a, 22b) verschiebbar angeordnet ist, wobei der Montageindikator (14) mindestens ein Sicherungselement (26a, 26b, 26c) aufweist, das an der Außenwand des ersten Rohrs (6) angeordnet werden kann,
- wobei die Hülse (16), das zweite Rohr (8) umschließend, in Richtung des Endes des zweiten Rohrs (8) zu verschieben ist, wobei das mindestens eine Sicherungselement (26a, 26b, 26c) durch die axial orientierte Öffnung (24a, 24b, 24c) in den mindestens einen angular orientierten Bajonettverschluss-Kanal (20a, 20b) einzuführen ist, wobei das mindestens eine Sicherungselement (26a, 26b, 26c) mit einer Wandung des angular orientierten Bajonettverschluss-Kanals (20a, 20b) in Anlage gerät, wobei die Hülse (16) um die Steckverbindung (4) herum zu drehen ist, wobei das mindestens eine Sicherungselement (26a, 26b, 26c) mit dem Prüfzapfen (22a, 22b) in Anlage gerät, wobei der Prüfzapfen (22a, 22b) innerhalb des angular orientierten Bajonettverschluss-Kanals (20a, 20b, 20c) aus einer ursprünglichen passiven Position in eine aktive Position zu verschieben ist.

2. Montageindikator nach Anspruch 1, der einen ersten ringförmigen Anschlag (18), der an einer Innenwand der zylinderförmigen Hülse (16) angeordnet ist, und einen zweiten Anschlag (28), der an einer Außenwand des Aufnahmemoduls (12) angeordnet ist, aufweist, wobei beim Verschieben der Hülse in Richtung des Endes des zweiten Rohrs (8) der erste Anschlag (18) mit dem zweiten Anschlag (28) in Anlage gerät.

3. Montageindikator nach Anspruch 1 oder 2, bei dem das an der Außenwand des ersten Rohrs (6) angeordnete Steckmodul (10) zu dem Ende des ersten Rohrs (6) einen Abstand aufweist,
- wobei die Wandung des mindestens einen angular orientierten Bajonettverschluss-Kanals (20a, 20b) mindestens einen zweiten Anschlag der Hülse (16) bildet, der zu dem Ende der Innenwand der Hülse (16) einen Abstand aufweist, der geringer als ein Abstand des ersten Anschlags (18) der Hülse (16) von dem Ende der Innenwand ist,
- wobei das mindestens eine Sicherungselement (26a, 26b, 26c) zu dem Ende des ersten Rohrs (6) einen Abstand aufweist, der größer als ein Abstand des Steckmoduls (10) zu dem Ende des ersten Rohrs (6) ist.

4. Montageindikator nach einem der voranstehenden Ansprüche, bei dem der Prüfzapfen (22a, 22b) in dem angular orientierten Bajonettverschluss-Kanal (20a, 20b, 20c) zumindest in der aktiven Position von außen erkennbar ist.

5. Montageindikator nach einem der voranstehenden Ansprüche, bei dem das mindestens eine Sicherungselement (26a, 26b, 26c) und der mindestens eine Bajonettverschluss-Kanal (20a, 20b) mindestens einen Bajonettverschluss bilden.

6. Montageindikator nach einem der voranstehenden Ansprüche, dessen Hülse (16) aus einem flammwidrigen Material besteht.

7. Rohranordnung, die zwei über eine Steckverbindung (4) verbundene Rohre (6, 8) und einen Montageindikator (14) nach einem der voranstehenden Ansprüche umfasst.

8. Rohranordnung nach Anspruch 7, bei der das Aufnahmemodul (12) und das Steckmodul (10) der Steckverbindung (4) miteinander zu verrasten sind.

9. Rohranordnung nach Anspruch 7 oder 8, bei der durch die beiden Rohre (6, 8) ein Fluid zu transportieren ist.

## Claims

1. Mounting indicator for a plug-in connection (4) which is configured for connecting two pipes (6, 8),
- wherein the plug-in connection (4) has a plug-in module (10) disposed on an outer wall of a first pipe (6) and a mounting module (12) which encloses an end of a second pipe (8), wherein an end of the first pipe (6) and the plug-in module (10) are to be inserted into the mounting module (12),
- wherein the mounting indicator (14) has a cylindrical sleeve (16) which has at least one angularly oriented bayonet fitting channel (20a, 20b) having an axially oriented opening (24a, 24b, 24c) in which is displaceably disposed a testing pin (22a, 22b), wherein the mounting indicator (14) has at least one securing element (26a, 26b, 26c) which can be disposed on the outer wall of the first pipe (6),
- wherein the sleeve (16), enclosing the second pipe (8), is to be displaced in the direction of the end of the second pipe (8), wherein the at least one securing element (26a, 26b, 26c) is to be inserted through the axially oriented opening (24a, 24b, 24c) into the at least one angularly oriented bayonet fitting channel (20a, 20b), wherein the at least one securing element (26a, 26b, 26c) comes into abutment with a wall of the angularly oriented bayonet fitting channel (20a, 20b), wherein the sleeve (16) is to be turned around the plug-in connection (4), wherein the at least one securing element (26a, 26b, 26c) comes into abutment with the testing pin (22a, 22b), wherein the testing pin (22a, 22b) is to be displaced within the angularly oriented bayonet fitting channel (20a, 20b, 20c) from an original passive position into an active position.

2. Mounting indicator according to claim 1, which has a first annular stop (18) which is disposed on an inner wall of the cylindrical sleeve (16), and a second stop (28) which is disposed on an outer wall of the mounting module (12), wherein when displacing the sleeve in the direction of the end of the second pipe (8) the first stop (18) comes into abutment with the second stop (28).

3. Mounting indicator according to claim 1 or 2, in the case of which the plug-in module (10) disposed on the outer wall of the first pipe (6) has a distance to the end of the first pipe (6),
- wherein the wall of the at least one angularly oriented bayonet fitting channel (20a, 20b) forms at least one second stop of the sleeve (16) which has a distance to the end of the inner wall of the sleeve (16) which is less than a distance of the first stop (18) of the sleeve (16) from the end of the inner wall,
- wherein the at least one securing element (26a, 26b, 26c) has a distance to the end of the first pipe (6) which is greater than a distance of the plug-in module (10) to the end of the first pipe (6).

4. Mounting indicator according to any of the preceding claims, in the case of which the testing pin (22a, 22b) in the angularly oriented bayonet fitting channel (20a, 20b, 20c) is discernible from the outside at least in the active position.

5. Mounting indicator according to any of the preceding claims, in the case of which the at least one securing element (26a, 26b, 26c) and the at least one bayonet fitting channel (20a, 20b) form at least one bayonet fitting.

6. Mounting indicator according to any of the preceding claims, the sleeve (16) of which is made of a flame-retardant material.

7. Pipe arrangement which comprises two pipes (6, 8) connected via a plug-in connection (4) and a mounting indicator (14) according to any of the preceding claims.

8. Pipe arrangement according to claim 7, in the case of which the mounting module (12) and the plug-in module (10) of the plug-in connection (4) are to be latched with one another.

9. Pipe arrangement according to claim 7 or 8, in the case of which a fluid is to be transported through the two pipes (6, 8).

## Revendications

1. Indicateur de montage pour une liaison d'enfichage (4), qui est réalisée pour la liaison de deux tubes (6, 8),
- dans lequel la liaison d'enfichage (4) présente un module d'enfichage (10) disposé au niveau d'une paroi extérieure d'un premier tube (6) et un module de logement (12), qui enferme une extrémité d'un deuxième tube (8), dans lequel une extrémité du premier tube (6) et le module d'enfichage (10) doivent être introduits dans le module de logement (12),
- dans lequel l'indicateur de montage (14) présente un manchon (16) cylindrique, qui présente au moins un canal de fermeture à baïonnette orienté de manière angulaire (20a, 20b) avec une ouverture orientée axialement (24a, 24b, 24c), dans lequel un tenon de contrôle (22a, 22b) est disposé de manière coulissante, dans lequel l'indicateur de montage (14) présente au moins un élément de blocage (26a, 26b, 26c), qui peut être disposé au niveau de la paroi extérieure du premier tube (6),
- dans lequel le manchon (16) doit être coulissé, en enfermant le deuxième tube (8), en direction de l'extrémité du deuxième tube (8), dans lequel l'au moins un élément de blocage (26a, 26b, 26c) doit être introduit par l'ouverture orientée axialement (24a, 24b, 24c) dans l'au moins un canal de fermeture à baïonnette orienté de manière angulaire (20a, 20b), dans lequel l'au moins un élément de blocage (26a, 26b, 26c) vient s'appliquer contre une paroi du canal de fermeture à baïonnette orienté de manière angulaire (20a, 20b), dans lequel le manchon (16) doit être tourné autour de la liaison d'enfichage (4), dans lequel l'au moins un élément de blocage (26a, 26b, 26c) vient s'appliquer contre le tenon de contrôle (22a, 22b), dans lequel le tenon de contrôle (22a, 22b) doit être coulissé à l'intérieur du canal de fermeture à baïonnette orienté de manière angulaire (20a, 20b, 20c) d'une position initialement passive à une position active.

2. Indicateur de montage selon la revendication 1, qui présente une première butée annulaire (18), qui est disposée au niveau d'une paroi intérieure du manchon (16) cylindrique, et une deuxième butée (28), qui est disposée au niveau d'une paroi extérieure du module de logement (12), dans lequel la première butée (18) vient s'appliquer contre la deuxième butée (28) lors du coulissement du manchon en direction de l'extrémité du deuxième tube (8).

3. Indicateur de montage selon la revendication 1 ou 2, dans lequel le module d'enfichage (10) disposé au niveau de la paroi extérieure du premier tube (6) présente une distance par rapport à l'extrémité du premier tube (6),
- dans lequel la paroi de l'au moins un canal de fermeture à baïonnette orienté de manière angulaire (20a, 20b) forme au moins une deuxième butée du manchon (16), qui présente une distance par rapport à l'extrémité de la paroi intérieure du manchon (16), qui est inférieure à une distance de la première butée (18) du manchon (16) par rapport à l'extrémité de la paroi intérieure,
- dans lequel l'au moins un élément de blocage (26a, 26b, 26c) présente une distance par rapport à l'extrémité du premier tube (6), qui est supérieure à une distance du module d'enfichage (10) par rapport à l'extrémité du premier tube (6).

4. Indicateur de montage selon l'une quelconque des revendications précédentes, dans lequel le tenon de contrôle (22a, 22b) dans le canal de fermeture à baïonnette orienté de manière angulaire (20a, 20b, 20c) est détectable de l'extérieur au moins dans la position active.

5. Indicateur de montage selon l'une quelconque des revendications précédentes, dans lequel l'au moins un élément de blocage (26a, 26b, 26c) et l'au moins un canal de fermeture à baïonnette (20a, 20b) forment au moins une fermeture à baïonnette.

6. Indicateur de montage selon l'une quelconque des revendications précédentes, dont le manchon (16) se compose d'un matériau ignifuge.

7. Ensemble de tube, qui comprend deux tubes (6, 8) reliés par le biais d'une liaison d'enfichage (4) et un indicateur de montage (14) selon l'une quelconque des revendications précédentes.

8. Ensemble de tube selon la revendication 7, dans lequel le module de logement (12) et le module d'enfichage (10) de la liaison d'enfichage (4) doivent être encliquetés l'un avec l'autre.

9. Ensemble de tube selon la revendication 7 ou 8, dans lequel un fluide doit être transporté par les deux tubes (6, 8).
